Europäisches Patentamt

European Patent Office

Office européen des brevets

(11) Veröffentlichungsnummer: **0 150 228**
**A1**

(12) **EUROPÄISCHE PATENTANMELDUNG**

(21) Anmeldenummer: 84100211.6

(22) Anmeldetag: 11.01.84

(51) Int. Cl.⁴: **G 01 C 1/00, F 24 J 2/30**

(43) Veröffentlichungstag der Anmeldung: 07.08.85
Patentblatt 85/32

(71) Anmelder: **Blümhuber, Hermann, Piracherstrasse 6,
D-8263 Burghausen (DE)**

(72) Erfinder: **Galanzino, Giovanni, Crispistrasse 17/23,
I-39100 Bozen (IT)**

(84) Benannte Vertragsstaaten: **AT BE CH DE FR IT LI SE**

(54) **Vorrichtung für Anlagen zur Nutzung der Sonnenenergie (Heliotechnik) zur automatischen Anpassung bzw. Nachführung an den jeweiligen Stand der Sonne.**

㊵7 Zur Nutzung der Sonnenenergie (Heliotechnik) ist es notwendig bzw. von Vorteil, wenn diese Anlagen dem Lauf der Sonne folgen und sich dem jeweiligen Stand der Sonne anpassen.

Die Erfindung zeigt eine Möglichkeit, wie diese Aufgabe auf einfache Art gelöst werden kann:

Zwei Steuerrohre (1, 2) erfahren bei Änderung des Sonneneinfallwinkels durch z. B. die beiden Spiegel (3, 4) eine unterschiedliche Längenausdehnung, die über einen Winkelhebel die Anlage steuert. Ein Hebelarm setzt über die Abdeckung (5) den Verstellbügel (7) der Sonne aus, welcher dann durch seine Längenausdehnung, die durch einen Parabolspiegel (8) beschleunigt werden kann, eine Drehung der Anlage in Richtung der Sonne bewirkt. Der andere Hebelarm aktiviert die Anlage wieder durch die Abdeckung (6) des jetzt noch längeren Steuerrohres (1). Ein Zahnkranz mit Sägezahnprofil erlaubt dem Verstellbügel (7) die Bewegung nur in einer Richtung; dabei wird eine Feder gespannt, mit deren Hilfe die Anlage z. B. bei Sonnenaufgang zurückgestellt wird. Voraussetzung dafür ist, daß die formschlüssige Verbindung zwischen Bügel und Zahnkranz gelöst wird, was durch die umgekehrte Längenänderung der Steuerrohre (1, 2) erfolgt.

Bild 1
Draufsicht

Sonne →

Schnitt A-B
(ohne Verstellbügel gezeichnet)

Anlage zur Nutzung der Sonnenenergie z.B. Parabolspiegel

Ansicht C

Kranz mit Sägeprofilzähnen

Bild 2

## Sonnennachlaufvorrichtung

Die Erfindung bezieht sich auf eine Sonnennachlaufvorrichtung, die bewirkt, daß Anlagen zur Nutzung der Sonnenenergie, wie z.B. Plan- und Hohlspiegel, Kollektoren usw. automatisch dem Lauf der Sonne folgen bzw. sich dem Stand der Sonne anpassen.

Bei verschiedenen Anlagen zur Nutzung der Sonnenenergie (Heliotechnik) z.B. bei Parabolspiegeln, ist die richtige Lage zur Sonne Voraussetzung für deren Funktion. Die Nachführung erfolgt derzeit über komplizierte und aufwendige Hilfsaggregate.

Der Erfindung liegt die Aufgabe zugrunde, die Stellung dieser Apparate auf einfache Art dem jeweiligen Stand der Sonne anzupassen.

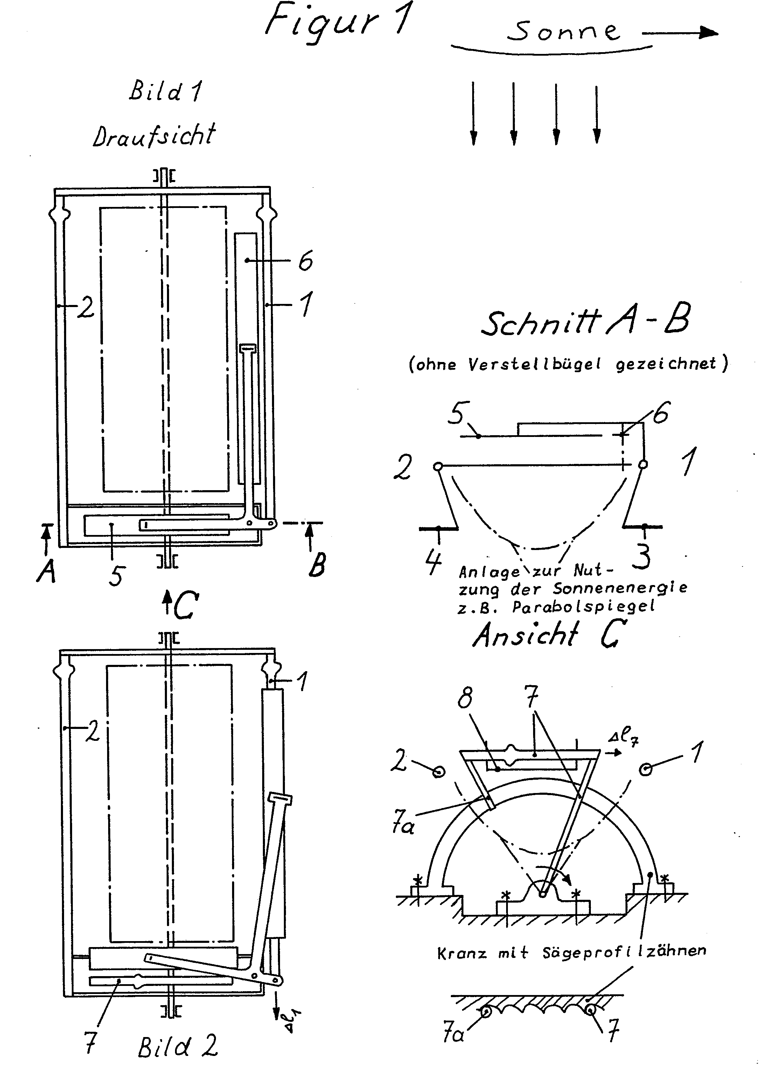

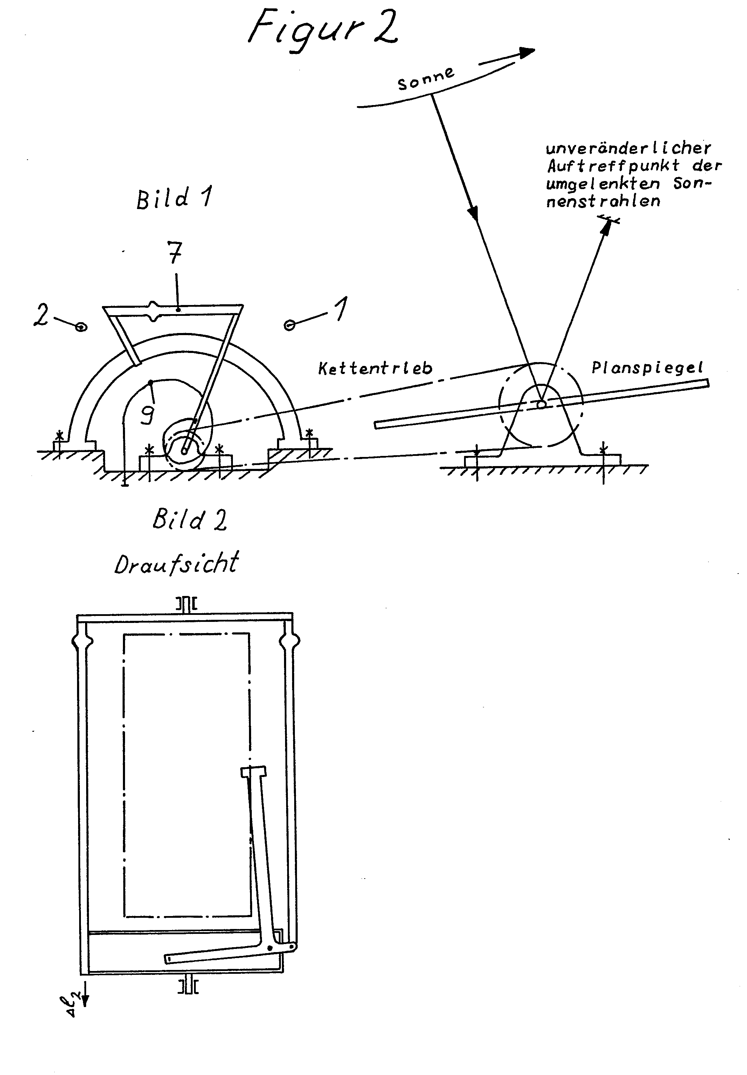

Die Figuren 1 und 2 zeigen die Wirkungsweise dieser Erfindung. Die Nachlaufvorrichtung besteht im wesentlichen aus drei Hauptteilen: Steuerung, Nachlauf- und Rückstellmechanismus. Pos.1 und 2 stellen Rohre mit Kompensatoren dar, die zur Erhöhung der Ausdehnung bei Temperaturunterschieden mit z.B. Äther gefüllt sind. Ausgangspunkt sei die Ideallage, die Sonne stehe senkrecht zum Spiegel. Wenn die Sonne in Pfeilrichtung wandert, erwärmt sich das Rohr Pos.1 gegenüber Pos.2 (wird z.B. dadurch erreicht, daß der Spiegel Pos.3 mehr Sonnenstrahlen reflektiert als der Spiegel Pos.4). Die Längenänderung zwischen Pos.1 und 2 wird ausgenutzt, um die Abdeckplatten Pos.5 und 6 zu verschieben ( Fig.1 Bild 2). Pos.5 setzt den Verstellbügel Pos.7 der Sonne aus und bewirkt durch dessen Ausdehnung eine Drehung des Spiegels zur Sonne, weil die besondere Gestaltung der Zähne (Sägeprofil) die Bewegung des Verstellbügels Pos.7 nur in einer Richtung zuläßt. Zur raschen Erwärmung des Verstellbügels kann ein Parabolspiegel Pos.8 eingebaut werden. Die Abdeckplatte Pos.6 überdeckt nun das Rohr Pos.1, wodurch die Längenänderung zwischen den Pos.1 und 2 rückgängig gemacht wird, d.h. die Steuerung wird auf's neue aktiviert, der Verstellbügel wird wieder zugedeckt und das Steuerrohr Pos.1
wird wieder frei. Die Längenänderung von Pos.7 wird aufgehoben
und der rückwärtige Teil Pos.7a nachgezogen.
Im Idealfall, d.h. daß die Sonne ohne Unterbrechung scheint,
ist die Abdeckplatte Pos.6 überflüssig, weil durch die Drehung
der Anlage über den Verstellbügel ein Längenausgleich zwischen
den Steuerrohren Pos.1 und 2 erfolgt. Zur Optimierung der Steuerung kann ein Hilfsmotor eingesetzt werden, der die Abdeckung
des Steuerrohres Pos.1 und oder des Verstellbügels übernimmt
und die Schaltimpulse aus der Längenänderung zwischen den Pos.1
und 2 bekommt.
Durch die jeweilige Längenänderung von Pos.7 wird eine Vorrichtung gespannt (in Fig.2 Bild 2 als Spiralfeder Pos.9 dargestellt), welche die Aufgabe hat, die Anlage gegen die Pfeilrichtung in die Sonne zu drehen. Das geschieht, indem sich das
Steuerrohr Pos.2 gegen Pos.1 ausdehnt und die formschlüssige
Verbindung zwischen den Zähnen und dem Verstellbügel aufhebt.
Die Anlage wird somit z.B. bei Sonnenaufgang der Sonne zugeführt.
Die Deklination der Sonne kann durch diese Erfindung ebenfalls
abgeglichen werden, z.B. durch eine um 90 Grad versetzt angeordnete zweite Nachlaufvorrichtung.


Fig.2 zeigt eine Lösungsmöglichkeit für die Aufgabenstellung,
daß die Sonnenstrahlen immer auf den selben Punkt gerichtet
sein sollen. Das kann mit Hilfe eines Planspiegels geschehen,
der durch diese Sonnennachlaufvorrichtung über eine Kette angetrieben wird. Da der Spiegelnachstellwinkel nur die Hälfte
des Sonnenvorlaufwinkels beträgt, ist ein Übersetzungsverhältnis von 2:1 notwendig.
Mit dieser Anordnung ist es möglich, die Sonnenenergie ev.
durch mehrere Spiegel auf eine geringe Fläche zu konzentrieren,
deren Lage sich nicht wesentlich ändert. Dadurch wird ein beliebiger Aufstellungsort für z.B. Sonnenkollektoren zur Erwärmung von Wasser ermöglicht, was den Vorteil hat, daß die Regelung mit Umwälzpumpe zwischen Kollektor und Speicher entfällt,
weil dadurch der Kollektor auf niedrigerem Niveau als der
Speicher aufgestellt werden kann. Somit erfolgt die Wärmeübertragung unter Ausnutzung der Schwerkraft des Wassers.

/                           0150228

Vorrichtung zur Anpassung von Anlagen der Heliotechnik an
den jeweiligen Stand der Sonne, dadurch bedingt, daß nur
die direkte Sonneneinstrahlung (unter Ausnutzung der Längenänderungen) ohne Energieumwandlung den Nachlauf- und Rückstellmechanismus bewirkt. Die Steuerung des Sonnennachlauf- und
oder Rückstellsystems erfolgt entweder ebenfalls durch direkte Sonneneinstrahlung ohne Energieumwandlung oder durch Hilfsenergie, z.B. Elektrizität.
Unter Anpassung an den jeweiligen Stand der Sonne wird verstanden:

1. Die immer rechtwinkelige Stellung der Anlage zur Sonne, wie
   sie z.B. für Parabolspiegel notwendig ist; hier entspricht
   der Nachstellwinkel dem Sonnenvorlaufwinkel.

2. Die Ablenkung der Sonnenstrahlen auf einen unveränderlichen
   Punkt z.B. durch Planspiegel; hier ist der Nachstellwinkel
   dem Sonnenvorlaufwinkel ungleich.

3. Die Rückstellung bei Sonnenaufgang und Rückstellung bzw.
   Nachführung, wenn die Sonne nicht ununterbrochen scheint.

4. Die Anpassung unter Berücksichtigung der Sonnendeklination.

Patentansprüche  **ABGEÄNDERTE ANSPRÜCHE**

Vorrichtung zur Anpassung von Anlagen der Heliotechnik an den jeweiligen Stand der Sonne, dadurch bedingt, daß nur die direkte Sonneneinstrahlung über eine Steuerung den Nachlauf-mechanismus bewirkt.

Die Ansprüche beziehen sich auf die Steuerung, die abhängig vom Stand der Sonne über stationäre Apparaturen Kräfte hervorruft, die zur Verstellung solcher Anlagen dienen; dazu gehören z.B. Parabolspiegel.

1) Bei Abweichung der geforderten Lage zwischen Sonne und Anlage wird über ein Verstellglied an einem oder mehreren stationären Körpern die der Sonne ausgesetzte Oberfläche vergrößert bzw. verkleinert.

2) Diese Temperaturänderungen werden zur Bewegung bzw. Drehung der Anlagen in die gewünschte Lage zur Sonne genutzt, z.B. daß diese Körper in Hohlräumen Flüssigkeiten oder Gase enthalten, welche die erforderlichen Kräfte übertragen.

3) Geringe Abweichungen von der geforderten Stellung der Anlage zur Sonne werden durch Spiegel oder Prismen in ihrer Auswirkung verstärkt.

4) Große Abweichungen können dadurch ausgeglichen werden, daß die Regelung so oft aktiviert wird, bis die richtige Lage wieder erreicht ist.

5) Die zulässige Abweichung ist einstellbar.

1/2     0150228

Figur 1

Sonne →

Bild 1
Draufsicht

Schnitt A-B

(ohne Verstellbügel gezeichnet)

Anlage zur Nutzung der Sonnenenergie z.B. Parabolspiegel

Ansicht C

Kranz mit Sägeprofilzähnen

Bild 2

0150228

Figur 2

Sonne

unveränderlicher
Auftreffpunkt der
umgelenkten Sonnenstrahlen

Bild 1

7

2

1

Kettentrieb

Planspiegel

9

Bild 2

Draufsicht

$\Delta \ell_2$

Europäisches
Patentamt

EUROPÄISCHER RECHERCHENBERICHT

0150228

Nummer der Anmeldung

EP 84 10 0211

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 304 221 (J.M. TRIHEY) * Spalte 7, Zeile 27 - Spalte 10, Zeile 58 * | 1 | G 01 C 1/00 F 24 J 2/30 |
| | --- | | |
| A | US-A-4 063 543 (J.H. HEDGER) * Insgesamt * | 1 | |
| | --- | | |
| A | US-A-4 275 712 (S.C. BAER) * Insgesamt * | 1 | |
| | ----- | | |

RECHERCHIERTE
SACHGEBIETE (Int. Cl. 3)

G 01 C
F 24 J

Der vorliegende Recherchenbericht wurde für alle Patentansprüche erstellt.

| Recherchenort | Abschlußdatum der Recherche | Prüfer |
|---|---|---|
| DEN HAAG | 13-09-1984 | DE BUYZER H.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82